# FASCICULE DE BREVET EUROPEEN

(11) **EP 2 069 617 B1**
(45) Date de publication et mention de la délivrance du brevet: **09.06.2010**
(21) Numéro de dépôt: 07823846.6
(22) Date de dépôt: 24.09.2007
(51) Int. Cl.: F01N 3/022, B01D 46/24

(54) **ELEMENT MONOLITHIQUE A COINS RENFORCES POUR LA FILTRATION DE PARTICULES**
MONOLITHISCHES ELEMENT MIT VERSTÄRKTEN ECKEN FÜR PARTIKELFILTRIERUNG
MONOLITHIC MEMBER WITH REINFORCED CORNERS FOR PARTICLE FILTRATION

(30) Priorité: 27.09.2006 FR 0653960; 06.12.2006 US 567330
(43) Date de publication de la demande: 17.06.2009
(73) Titulaire: Saint-Gobain Centre de Recherches et d'Etudes Européen, 92400 Courbevoie (FR)
(72) Inventeur: CARRANZA, Francisco José, 13300 Salon de Provence (FR); WOOLLEY, David E., Ayer, MA 01432 (US); LEIGHTON, Andrew K., Dudley, MA 01571 (US)
(74) Mandataire: Lucas, Francois
(86) Numéro de dépôt international: PCT/FR2007/052001
(87) Numéro de publication internationale: WO 2008/037919

(56) Documents cités:
- EP-A- 1 698 397
- EP-A1- 1 484 100

## Description

L'invention se rapporte au domaine des filtres à particules notamment utilisés dans une ligne d'échappement d'un moteur pour l'élimination des suies produites par la combustion d'un carburant diesel dans un moteur à combustion interne.

Les structures de filtration pour les suies contenues dans les gaz d'échappement de moteur à combustion interne sont bien connues de l'art antérieur. Ces structures présentent le plus souvent une structure en nid d'abeille, une des faces de la structure permettant l'admission des gaz d'échappement à filtrer et l'autre face l'évacuation des gaz d'échappement filtrés. La structure comporte, entre les faces d'admission et d'évacuation, un ensemble de conduits ou canaux adjacents d'axes parallèles entre eux séparés par des parois poreuses de filtration, lesquels conduits sont obturés à l'une ou l'autre de leurs extrémités pour délimiter des chambres d'entrée s'ouvrant suivant la face d'admission et des chambres de sortie s'ouvrant suivant la face d'évacuation. Pour une bonne étanchéité, la partie périphérique de la structure est le plus souvent entourée d'un ciment de revêtement. Les canaux ou conduits sont alternativement obturés dans un ordre tel que les gaz d'échappement, au cours de la traversée du corps en nid d'abeille, sont contraints de traverser les parois latérales des canaux d'entrée pour rejoindre les canaux de sortie. De cette manière, les particules ou suies se déposent et s'accumulent sur les parois poreuses du corps filtrant. Le plus souvent, les corps filtrants utilisés dans les lignes d'échappement automobile sont en matière céramique poreuse, par exemple en cordiérite ou en carbure de silicium.

De façon connue, durant sa mise en oeuvre, le filtre à particules est soumis à une succession de phases de filtration (accumulation des suies) et de régénération (élimination des suies). Lors des phases de filtration, les particules de suies émises par le moteur sont retenues et se déposent à l'intérieur du filtre. Lors des phases de régénération, les particules de suie sont brûlées à l'intérieur du filtre, afin de lui restituer ses propriétés de filtration. La structure poreuse est alors soumise à des contraintes thermo-mécaniques intenses, qui peuvent entraîner des micro-fissurations susceptibles sur la durée d'entraîner une perte sévère des capacités de filtration de l'unité, voire sa désactivation complète. Ce phénomène est particulièrement observé sur des filtres monolithiques de grand diamètre. Il a en effet été observé, en fonctionnement dans une ligne d'échappement, que le gradient thermique entre le centre et la périphérie de telles structures est d'autant plus élevé que les dimensions du monolithe sont importantes.

Pour résoudre ces problèmes et augmenter la durée de vie des filtres, il a été proposé plus récemment des structures de filtration associant plusieurs blocs ou éléments monolithiques en nid d'abeille. Les éléments sont le plus souvent assemblés entre eux par collage au moyen d'une colle ou d'un ciment de nature céramique, appelés dans la suite de la description ciment de joint. Des exemples de telles structures filtrantes sont par exemple décrits dans les demandes de brevets EP 816 065, EP 1 142 619, EP 1 455 923, WO 2004/090294, EP 1484100, EP 1698397 ou encore WO 2005/063462. Afin d'assurer une meilleure relaxation des contraintes dans une structure assemblée, il est connu que les coefficients de dilatation thermique des différentes parties de la structure (éléments de filtration, ciment de revêtement, ciment de joint) doivent être sensiblement du même ordre. De ce fait, lesdites parties sont avantageusement synthétisées sur la base d'un même matériau, le plus souvent le carbure de silicium SiC ou la cordiérite. Ce choix permet en outre d'homogénéiser la répartition de la chaleur lors de la régénération du filtre.

Pour augmenter, à volume de filtre constant, la surface de filtration dudit filtre, il a été proposé, par exemple dans la demande de brevet WO 05/016491, des éléments filtrants dont la forme et le volume interne des canaux d'entrée et de sortie sont différents. Dans de telles structures, les éléments de paroi se succèdent, en coupe transversale et en suivant un rang horizontal et/ou vertical de canaux, pour définir une forme sinusoïdale ou en vague (wavy en anglais). Les éléments de paroi ondulent typiquement d'une demi période de sinusoïde sur la largeur d'un canal.

Pour améliorer la résistance thermomécanique des éléments présentant une telle forme « wavy » des canaux et par suite du filtre assemblé à partir desdits éléments présentant cette forme particulière de canaux, il a été proposé dans la demande WO 05/063462, une structure en nid d'abeille dont le rapport R, caractérisant deux canaux périphériques adjacents, entre l'épaisseur moyenne « E » de l'ensemble des parois externes et l'épaisseur moyenne « e » de l'ensemble des parois internes desdits canaux, est supérieur à 1,2. Il est indiqué dans cette demande qu'une telle configuration permet de diminuer le risque de fissures pouvant apparaître notamment lorsque des contraintes locales de fortes amplitudes sont générées pendant les phases de régénération, notamment dues à de forts gradients de température existant au sein du filtre et à la différence de nature des matériaux utilisés pour les éléments monolithiques et le ciment de joint.

Si effectivement une telle surépaisseur des parois permet d'améliorer de façon significative la résistance thermomécanique des filtres assemblés à partir de tels éléments, elle entraîne cependant également un alourdissement non négligeable des filtres, de l'ordre typiquement d'environ 5,5 à 7,5 %.

Cet alourdissement présente l'inconvénient d'augmenter l'inertie thermique du filtre, ce qui entraîne une surconsommation lors des phases de régénération et, lorsque le filtre incorpore une composante catalytique, pénalise son efficacité catalytique du fait de l'augmentation du temps d'activation (ou d'amorçage) du catalyseur.

La présente invention a essentiellement pour but de fournir des éléments pour la formation d'un filtre conservant les bonnes propriétés thermomécaniques des filtres à paroi renforcée précédemment décrits, mais dont le poids total est sensiblement minimisé.

Plus précisément, l'invention se rapporte à un élément monolithique en nid d'abeille comprenant un ensemble de conduits ou canaux adjacents d'axes parallèles entre eux séparés par des parois poreuses, lesdits conduits étant obturés par des bouchons à l'une ou l'autre de leurs extrémités pour délimiter des conduits d'entrée s'ouvrant suivant une face d'admission des gaz et des conduits de sortie s'ouvrant suivant une face d'évacuation des gaz, de telle façon que le gaz traverse les parois poreuses, ledit élément se **caractérisant en ce que** les canaux périphériques formant partie de la paroi externe dudit élément sont configurés pour concourir à la formation d'une paroi externe dont la face interne est sensiblement plane sur toute la longueur de l'élément et en ce que ladite paroi plane présente en outre une surépaisseur au niveau des coins, de telle sorte que, selon une coupe transversale, le rapport R de l'épaisseur E_{c} de la paroi, mesurée selon la bissectrice de l'angle au niveau d'un coin de l'élément, sur l'épaisseur minimale Eₘᵢₙ de ladite paroi soit supérieur à 1,5 et de préférence supérieur à 1,6, voire 1,7.

De préférence, l'élément monolithique présente, en coupe transversale, une ondulation périodique des parois des canaux internes permettant d'accroître le volume global desdits canaux d'entrée au dépend des canaux de sortie.

En général l'épaisseur Eₘᵢₙ de ladite paroi externe est mesurée au milieu d'un coté de l'élément.
Selon un mode possible de réalisation de l'invention, ladite surépaisseur s'étend, à partir de chaque coin de l'élément, sur une portion des parois externes et dans lequel ladite surépaisseur est continue et constante sur ladite portion.

Selon un mode alternatif, ladite surépaisseur s'étend, à partir de chaque coin de l'élément, sur une portion des parois externes et dans lequel ladite surépaisseur est continue et décroissante sur ladite portion.

Avantageusement, selon l'invention, ladite surépaisseur s'étend, à partir de chaque coin de l'élément sur une surface totale égale à au moins un huitième et de préférence égale à au moins un quart de la surface totale des faces internes des parois externes.

Selon l'invention, le rapport de R' de l'épaisseur de la paroi externe, mesurée selon la bissectrice de l'angle au niveau d'un coin de l'élément, sur l'épaisseur moyenne e des parois internes des canaux est par exemple supérieur à 2,7, de préférence supérieur à 3,5.

En outre, l'épaisseur E_{c} de la paroi, mesurée selon la bissectrice de l'angle au niveau d'un coin de l'élément est en générale comprise entre 150 et 5000 microns, de préférence entre 700 et 2000 microns, de préférence encore entre 1000 et 1300 microns.

De même, l'épaisseur Eₘᵢₙ de ladite paroi au centre d'un coté de l'élément est avanatgeusement comprise entre 100 et 3500 microns, de préférence entre 450 et 1300 microns, de préférence encore entre 600 et 900 microns.

Typiquement, l'épaisseur moyenne e des parois internes des canaux est comprise entre 100 et 400 microns, de préférence entre 200 et 350 microns.

L'invention se rapporte en outre à un filtre obtenu par l'assemblage d'une pluralité d'éléments monolithiques tels que précédemment décrits, lesdits éléments étant liés par un ciment de joint.

Avantageusement, au sein du filtre, lesdits éléments et le ciment de joint sont à base d'un même matériau céramique, préférentiellement à base de carbure de silicium SiC.

Enfin, l'invention se rapporte à une filière d'extrusion conformée de manière à former, par extrusion d'une matière céramique, un élément monolithique tel que précédemment décrit.

L'invention sera mieux comprise à la lecture de la description de différents modes de réalisations de l'invention qui suivent, respectivement illustrés par les figures 1 à 6.

La figure 1 schématise une coupe transversale d'un élément monolithique selon WO 05/063462.

La figure 2 représente schématiquement, en coupe transversale, la partie de coin d'éléments monolithiques selon l'invention.

La figure 3 illustre une coupe transversale d'un élément monolithique conforme à un premier mode de réalisation de l'invention, dans lequel les parois externes de l'élément présentent une face interne sensiblement plane sur toute la longueur de l'élément, lesdites parois externes présentant en outre une surépaisseur continue et constante au niveau des coins.

La figure 4 schématise une coupe transversale d'un élément monolithique conforme à un deuxième mode de réalisation de l'invention dans lequel les parois externes de l'élément présentent une face interne sensiblement plane sur toute la longueur de l'élément, lesdites parois externes présentant en outre une surépaisseur continue et décroissante des coins vers le centre des cotés de l'élément.

La figure 5 représente une coupe transversale d'un élément monolithique conforme à un troisième mode de réalisation de l'invention dans lequel une surépaisseur continue et décroissante des coins, de façon non linéaire, résulte d'un rayon de courbure de la paroi externe en face interne R₁ supérieur à celui de la face externe R₂.

La figure 6 illustre une coupe transversale d'un élément monolithique combinant les caractéristiques des précédents deuxième et troisième modes de réalisation de l'invention.

Selon des techniques bien connues, tous les éléments monolithiques sont avantageusement obtenus par extrusion d'une pâte meuble, par exemple en carbure de silicium, pour former une structure poreuse en nid d'abeille.

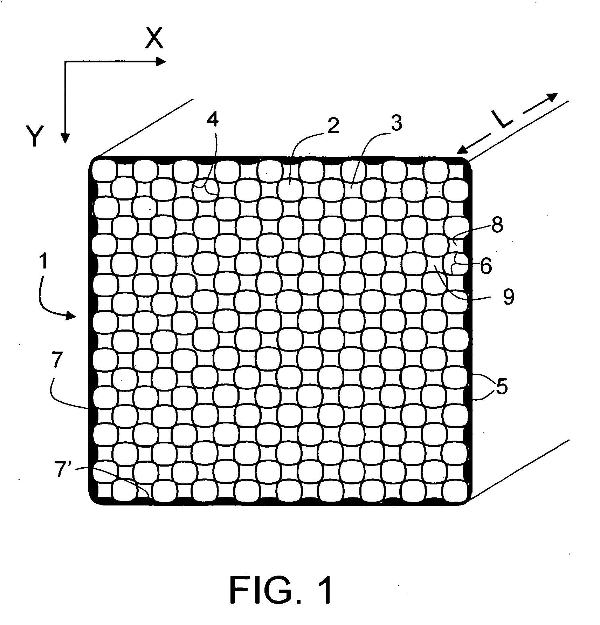

Sans que cela puisse être considéré comme restrictif, la structure poreuse extrudée se présente sous forme de blocs monolithiques 1 dont la forme extérieure est celle d'un parallélépipède rectangle s'étendant selon un axe longitudinal entre deux faces amont et aval, tel que représenté sur la figure 1. Sa section est sensiblement carrée. Sur les extrémités des éléments 1 débouchent une pluralité de canaux 2, 3 adjacents, dont l'axe principal est parallèle à l'axe longitudinal du bloc.
De façon connue mais non représenté sur les figures, les structures poreuses extrudées sont alternativement bouchées sur leur face amont ou sur leur face aval par des bouchons amont et aval, respectivement, pour former des canaux de sortie 3 et des canaux d'entrée 2, respectivement. Chaque canal 2 ou 3 définit ainsi un volume intérieur délimité par des parois latérales 4, un bouchon d'obturation (non représenté sur les figures) disposé soit sur la face amont pour un canal de sortie, soit sur la face aval pour un canal d'entrée et une ouverture débouchant alternativement vers la face aval ou la face amont, de telle façon que les canaux d'entrée 2 et de sortie 3 sont en communication de fluide par les parois latérales 4.
De manière connue et non représentée sur les figures, les éléments monolithes 1 sont ensuite assemblés entre eux par collage au moyen d'un ciment de joint de nature céramique, par exemple également à base de carbure de silicium, en une structure de filtration ou filtre assemblé. L'assemblage ainsi constitué peut être ensuite usiné pour prendre, par exemple, une section ronde ou ovoïde, puis par exemple recouvert d'un ciment de revêtement pour en assurer l'étanchéité. Il en résulte un filtre assemblé apte à être inséré dans une ligne d'échappement, selon des techniques bien connues. En fonctionnement, le flux F des gaz d'échappement entre dans le filtre par les canaux d'entrée 2, puis traverse les parois latérales filtrantes 4 de ces canaux pour rejoindre les canaux de sortie 3.

Pour plus de précision en ce qui concerne la structure des éléments monolithiques et de leur assemblage pour la formation d'un filtre, on pourra par exemple se reporter aux demandes WO 05/063462 ou encore WO 05/016491.

Selon le mode décrit dans la demande WO 05/063462 et illustré par la figure 1, les ensembles de canaux d'entrée 2 et de canaux de sortie 3 sont imbriqués l'un dans l'autre de manière à former, en section transversale, un motif en damier où lesdits canaux d'entrée alternent avec lesdits canaux de sortie, dans le sens de la hauteur (direction y) comme dans celui de la largeur (direction x).

Dans le mode représenté sur la figure 1 et selon l'invention, la section transversale des canaux d'entrée 2 est différente de celle des canaux de sortie 3. Ainsi, les sections transversales des canaux d'entrée 2 sont supérieures à celles des canaux de sortie 3, afin d'accroître le volume global des canaux d'entrée aux dépens de celui des canaux de sortie. La capacité de stockage des suies par élément unitaire 1 est ainsi avantageusement augmentée.

Les canaux d'entrée et de sortie sont donc délimités par des éléments de paroi 4 non plans, concaves du côté des canaux d'entrée et convexes du côté des canaux de sortie.

De préférence, les éléments de paroi se succèdent, en coupe transversale et en suivant un rang horizontal (selon l'axe x) ou vertical (selon l'axe y) de canaux, pour définir une forme sinusoïdale ou en vague (wavy en anglais). Les éléments de paroi ondulent par exemple sensiblement d'une demi période de sinusoïde sur la largeur d'un canal.

On appelle canaux périphériques 8 les canaux localisés à la périphérie d'un élément 1. On appelle canaux internes 9 les canaux dont aucune portion ne forme partie de la paroi externe 7.

Les parois 4 des canaux périphériques comportent une portion 5 formant partie de la paroi externe 7 de l'élément, c'est-à-dire en contact avec l'extérieur de l'élément et une portion de parois interne 6, partagée avec des canaux 8 ou 9 adjacents.

Les parois des canaux internes 9 sont caractérisées par une épaisseur e qui de préférence est sensiblement constante dans tout le volume de l'élément. De préférence, la portion de parois interne 6 des canaux périphériques 8 présente également cette épaisseur e.

La structure selon l'art antérieur se caractérise par une paroi externe 7 globalement renforcée, dont la face interne 7' n'est pas plane mais présente également une surface du type « wavy ». La paroi externe 7 périphérique de l'élément monolithique est ainsi renforcée par une surépaisseur moyenne et périodique de matière disposée régulièrement sur ses quatre faces et s'étendant sur toute la longueur L dudit élément, depuis sa face amont jusqu'à sa face aval, comme représenté par la coupe transversale de la figure 1.

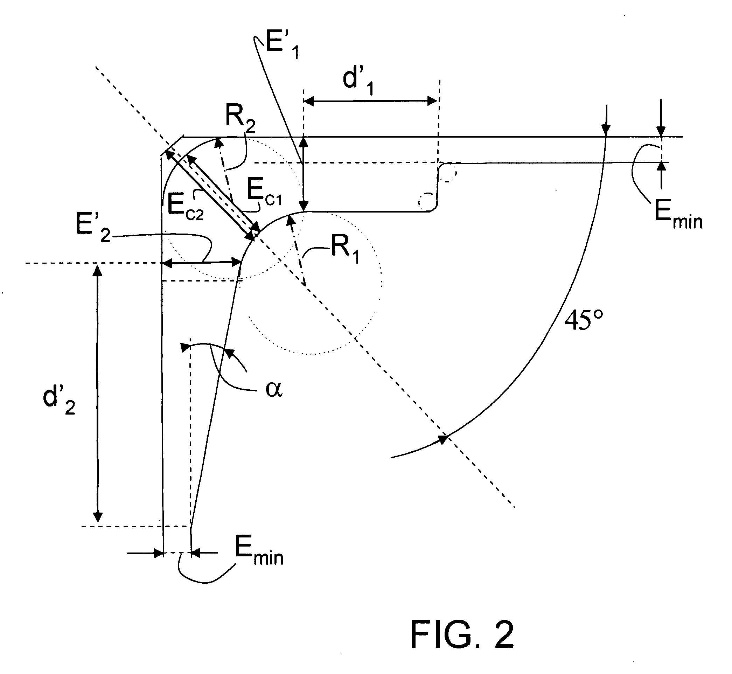

La figure 2 représente schématiquement, en coupe transversale, la partie de coin renforcée d'éléments monolithiques selon l'invention. Plus précisément, la figure 2 illustre différents profils des surépaisseurs E_{c} au niveau des coins. Selon l'invention, le rapport de E_{c}, mesurée tel qu'illustré sur la figure 2 selon la bissectrice de l'angle au niveau d'un coin sur l'épaisseur minimale de la paroi externe de d'élément Eₘᵢₙ, est supérieur à 1,5. Une telle caractéristique conduit avantageusement à un meilleur compromis entre la résistance thermomécanique et le poids total de l'élément.

Telle que représentée sur la figure 2, ladite surépaisseur en coin E_{c} peut avantageusement être définie :
- d'une part en fonction du rayon de courbure R₁ de la face interne de la paroi externe au niveau d'un coin de l'élément,
- d'autre part en fonction de la forme de la face externe de la paroi externe au niveau dudit coin.
Selon un premier exemple illustré par la figure 2, l'élément présente en coin des surfaces externes sensiblement arrondies selon un rayon de courbure R₂, définissant une surépaisseur en coin E_{c1}. Le rayon de courbure R₂ est selon l'invention de préférence inférieur ou égal à R₁. Sans sortir du cadre de l'invention, R₂ pourrait cependant également être supérieur à R₁.
Selon un second exemple également illustré par la figure 2, les coins de l'élément peuvent également présenter des surfaces externes sensiblement planes, typiquement sous la forme de chanfreins, qui définissent une surépaisseur en coin E_{c2}.
Tel que représenté sur la figure 2, pour caractériser les éléments selon l'invention, on définit en outre une surépaisseur maximale E' des parois « hors coin », c'est-à-dire indépendante de l'effet de renforcement lié à la différence des rayons de courbure en coin.
Cette dimension E' peut être caractérisé par :
- soit une valeur constante sur toute la longueur d₁' de ladite surépaisseur (E'₁ sur la figure 2),
- soit une variation croissante et régulière en direction du coin sur toute la longueur d₂' de la surépaisseur (valeur maximale E'₂ sur la figure 2).
Selon l'invention, on mesure dans ce dernier cas l'augmentation régulière de ladite surépaisseur par un angle α compris entre 0,5 et 45°, par exemple compris entre 1 et 10°.

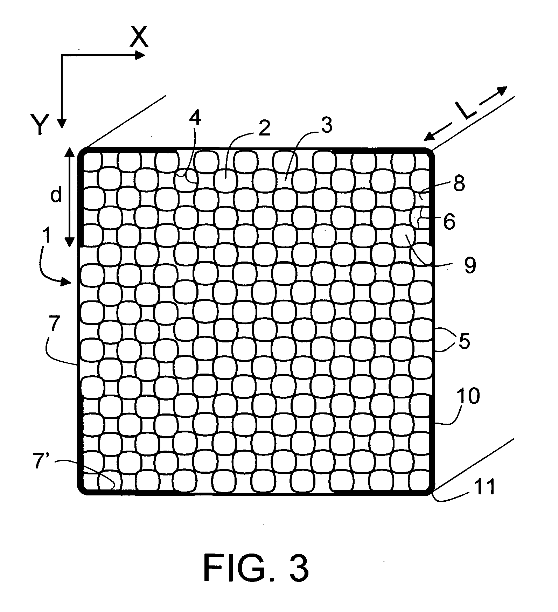

La figure 3 illustre un premier mode de réalisation de l'invention. Dans toutes les figures, des éléments et parties de même nature sont désignés par les mêmes côtes de référence. En relation avec la figure 2, dans ce mode de réalisation l'angle α est égal à 0 et le rayon de courbure R₁ de la face interne de la paroi est égal au rayon de courbure R₂ de la face externe. Sans sortir du cadre de l'invention, on pourrait bien évidemment remplacer le coin arrondi de la face externe ou la face interne par un chanfrein.

L'élément monolithique comprend classiquement une partie centrale dont les canaux d'entrée 2 et de sortie 3 présentent une section dont la forme est conforme à l'enseignement de la demande WO 03/064132. Selon ce mode, les éléments de paroi se succèdent, en coupe transversale et en suivant un rang horizontal ou vertical de canaux, pour définir une forme sinusoïdale ou en vague, telle que déjà représentée sur la figure 1. Les éléments de paroi ondulent d'une demi période de sinusoïde sur la largeur d'un canal.

Typiquement, la densité de canaux des parties centrale et périphérique est comprise entre 6 et 1800 cpsi, de préférence entre 90 et 400 cpsi (cellules par pouce carré, ou « cells per square inch » un cpsi étant égal à 1 cellule/6,45 cm²), soit entre environ 14 et environ 62 c/cm².

Selon le mode illustré par la figure 3, les parois externes 7 de l'élément présentent une face interne 7' sensiblement plane sur toute la longueur de l'élément. Une telle configuration de la paroi externe 7 s'obtient de manière connue, sans difficultés, par l'utilisation d'une filière d'extrusion adaptée. Les canaux périphériques 8 présentent selon ce mode une portion de parois interne 6, partagée avec des canaux adjacents 8 ou 9, dont la forme et l'épaisseur est identique à celle des canaux internes 9 et une portion plane 5 formant partie de la paroi externe 7 de l'élément. Cette portion plane 5 présente une épaisseur minimale Eₘᵢₙ, par exemple mesurée au milieu d'un coté de l'élément, supérieure à l'épaisseur moyenne e des parois internes d'un facteur au moins égal à 1,2, de préférence supérieur à 1,4.

Selon ce mode, les parois externes 7 se différentient non seulement par la planéité de leur face interne 7' mais également par la présence d'une surépaisseur 10 présente au niveau des coins 11 de l'élément. Selon le premier mode de réalisation de l'invention illustré par la figure 3, cette surépaisseur s'étend sur toute la longueur L de l'élément et pour chaque coté de l'élément sur une distance d à partir des coins. La surépaisseur selon ce mode se **caractérise en ce qu'**elle est continue et constante sur toute sa longueur L et toute sa largeur d.

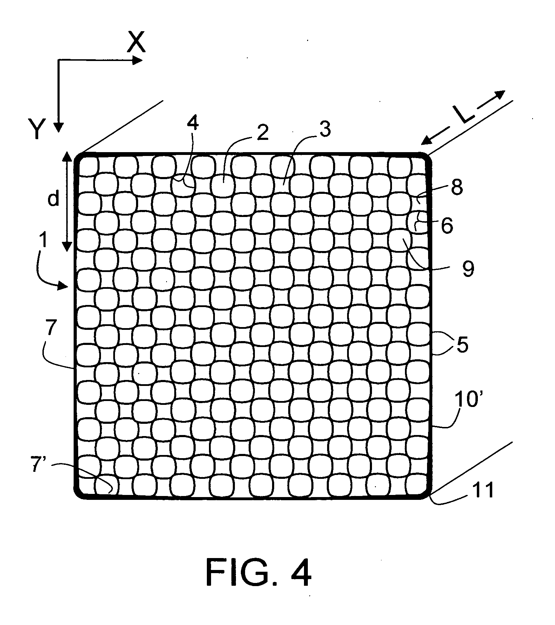

La figure 4 illustre un second mode de réalisation de l'invention identique au précédent mais pour lequel la surépaisseur 10' présente au niveau des coins 11 n'est pas constante suivant sa largeur d mais décroît d'une manière sensiblement régulière suivant le coté de l'élément, depuis le coin 11, où l'épaisseur est maximale, et dans la direction du milieu du coté, où l'épaisseur de la paroi externe est minimale, comme illustré par la coupe transversale de la figure 4.

Sans sortir du cadre de l'invention, on pourrait bien évidemment remplacer le coin arrondi de la face externe voire de la face interne par un chanfrein.

Dans ce deuxième mode de réalisation l'angle α ainsi formé (cf. figure 2) est compris entre 0,5 et 45° et le rayon de courbure R₁ de la face interne de la paroi externe tel que défini en relation la figure 2 est égal à celui au rayon de courbure R₂ en face externe.

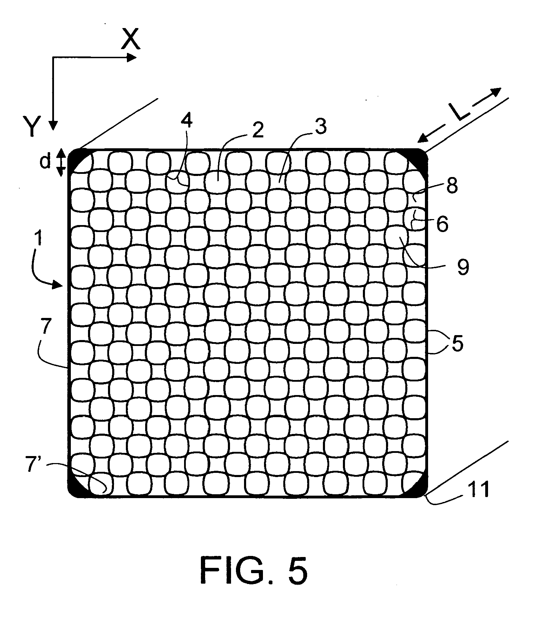

La figure 5 illustre un troisième mode de réalisation de l'invention dans lequel l'élément est renforcé essentiellement au niveau de ses coins. Les coins de l'élément sont arrondis et le rayon de courbure R₂ de la face externe de la paroi externe est inférieur au rayon de courbure R₁ de la face interne de la paroi externe.

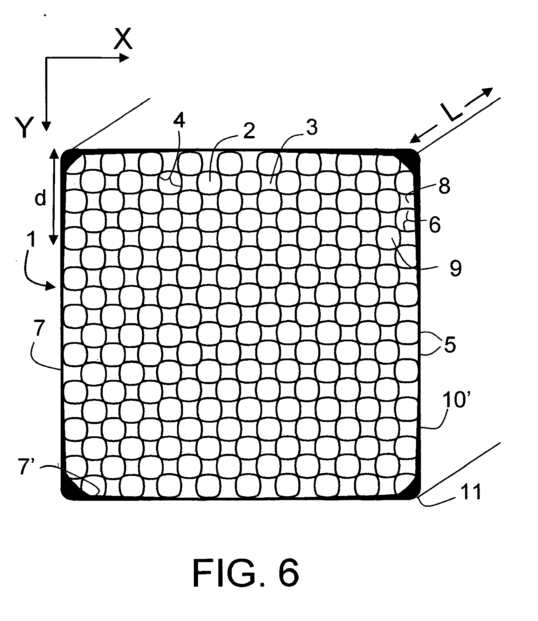

La figure 6 illustre un quatrième mode de réalisation de l'invention, dans lequel le rayon de courbure R₂ est inférieur au rayon de courbure R₁ et dans lequel la surépaisseur 10' s'étend sur les cotés de l'élément suivant une largeur d, de façon décroissante et sensiblement régulière depuis le coin et en direction du milieu des cotés de manière similaire au mode illustré par la figure 4.

Selon l'invention, le renforcement des coins s'étend de préférence sur toute la longueur L de l'élément, depuis la face amont jusqu'à la face aval.

Dans le cas où les coins présentent une forme arrondie, la largeur d du renforcement est avantageusement déterminée selon l'invention en fonction des rayons de courbure R₂ et R₁. Typiquement, les rayons R₂ et R₁ sont choisis pour que la largeur d du renforcement soit comprise entre 0,5 et 8 fois la largeur d'une cellule, de préférence entre 1 et 6 fois la largeur d'une cellule.

Le matériau poreux constituant les éléments unitaires est de préférence du carbure de silicium recristallisé à une température comprise entre 2100 et 2400°C.

L'invention et ses avantages seront mieux compris à la lecture des exemples qui suivent, donnés à titre purement illustratif.

Tous les éléments des exemples qui suivent ont été synthétisés de manière classique et telle que décrite dans l'exemple 1 :

### Exemple 1 (selon l'art antérieur)

On a synthétisé selon les techniques de l'art, par exemple décrites dans les brevets EP 816 065, EP 1 142 619, EP 1 455 923 ou encore WO 2004/090294, une première population d'éléments monolithiques en forme de nid d'abeille et en carbure de silicium.

Pour ce faire, on mélange dans un malaxeur :
- 3000 g d'un mélange de particules de carbure de silicium de pureté supérieure à 98% et présentant une granulométrie telle que 70% en masse des particules présente un diamètre supérieur à 10 micromètres, le diamètre médian de cette fraction granulométrique étant inférieur à 300 micromètres. Au sens de la présente description, le diamètre médian désigne le diamètre des particules au dessous duquel se trouve 50% en masse de la population.
- 150 g d'un liant organique du type dérivé de cellulose.
On ajoute de l'eau et on malaxe jusqu'à obtenir une pâte homogène et dont la plasticité permet l'extrusion, la filière étant configurée pour l'obtention de blocs monolithes dont les canaux et les parois externes présentent une structure « wavy » illustrée par la figure 1 et conforme à l'enseignement de la demande WO 05/064132.

On sèche ensuite les monolithes crus obtenus par micro-onde pendant un temps suffisant pour amener la teneur en eau non liée chimiquement à moins de 1% en masse.
On bouche alternativement les canaux de chaque face du monolithe selon des techniques bien connues, par exemple décrites dans la demande WO 2004/065088.

Le bloc monolithe est ensuite cuit selon une montée en température de 20°C/heure jusqu'à atteindre une température de l'ordre de 2200°C qui est maintenue pendant 2 heures.
Le matériau obtenu présente un porosité ouverte de 47% et un diamètre moyen de distribution de pores de l'ordre de 15µm.
Les caractéristiques structurales des éléments ainsi obtenus sont données dans le tableau 1 ci-après.
La face interne de la paroi externe présente une surface « wavy » telle que l'épaisseur de la paroi externe varie entre un minimum de 544 microns et un maximum de 767 microns. L'épaisseur moyenne de la paroi externe est d'environ 660 microns.

Pour la formation du filtre, les éléments issus d'un même mélange sont ensuite assemblés entre eux par collage au moyen d'un ciment de composition chimique suivante : 72% poids de SiC, 15% poids d'Al₂O₃, 11% poids de SiO₂, le reste étant constitué par des impuretés majoritairement de Fe₂O₃ et d'oxydes de métaux alcalins et alcalino-terreux. L'épaisseur moyenne du joint entre deux blocs voisins est de l'ordre de 2 mm. La conductivité thermique du ciment de joint après traitement thermique est de l'ordre de 2,1 W/m.K à la température ambiante et sa porosité ouverte mesurée est d'environ 38%.

L'ensemble est ensuite usiné, afin de constituer des filtres assemblés de forme cylindrique.

### Exemple 2 (selon l'invention):

La technique de synthèse décrite précédemment est reprise à l'identique, mais la filière est cette fois-ci adaptée de manière à réaliser des blocs monolithes se caractérisant par une disposition « wavy » des canaux internes, des parois externes dont la face interne est sensiblement plane, et une surépaisseur constante et continue des coins, suivant le mode de réalisation illustré par la figure 3. Cet exemple permet d'illustrer un mode dans lequel α =0 et R₁ = R₂.
Les principales caractéristiques structurales des éléments obtenus selon cet exemple sont reportées dans le tableau 1.

### Exemple 3 (selon l'invention):

La technique de synthèse décrite précédemment est également reprise à l'identique, mais la filière est cette fois-ci adaptée de manière à réaliser des blocs monolithes se caractérisant par une disposition « wavy » des canaux internes, des parois externes dont la face interne est sensiblement plane, et une surépaisseur constante et continue des coins, suivant le mode de réalisation illustré par la figure 4. Cet exemple permet d'illustrer un mode dans lequel α > 0 et R₁ = R₂. Les principales caractéristiques structurales des éléments obtenus selon cet exemple sont reportées dans le tableau 1.

### Exemple 4 (selon l'invention):

La technique de synthèse décrite précédemment est également reprise à l'identique, mais la filière est cette fois-ci adaptée de manière à réaliser des blocs monolithes se caractérisant par une disposition « wavy » des canaux internes, des parois externes dont là face interne est sensiblement plane, et une surépaisseur des coins conforme au mode de réalisation illustré par la figure 5. Cet exemple permet d'illustrer un mode dans lequel α = 0 et R₁ > R₂.
Les principales caractéristiques structurales des éléments obtenus selon cet exemple sont reportées dans le tableau 1.

### Exemple 5 (selon l'invention):

La technique de synthèse décrite précédemment est également reprise à l'identique, mais la filière est cette fois-ci adaptée de manière à réaliser des blocs monolithes se caractérisant par une disposition « wavy » des canaux internes, des parois externes dont la face interne est sensiblement plane, et une surépaisseur continue et décroissante des coins, suivant le mode de réalisation illustré par la figure 6 à la différence près que R₁ < R₂.
Les principales caractéristiques structurales des éléments obtenus selon cet exemple sont reportées dans le tableau 1 ci-après.

**Tableau 1**

| | Exemple 1 | Exemple 2 | Exemple 3 | Exemple 4 | Exemple 5 |
|---|---|---|---|---|---|
| **Forme représentative** | Fig.2 | Fig.3 | Fig.4 | Fig.5 | Fig.6 mais R1 < R2 |
| **Géométrie des canaux internes** | wavy | wavy | wavy | wavy | Wavy |
| **Géométrie des parois externes (face interne)** | wavy | lisse | lisse | lisse | Lisse |
| **Taille éléments (mm)** | 37,8 | 37,8 | 37,8 | 37,8 | 37,8 |
| **Densité de canaux (CPSI)** | 270 | 270 | 270 | 270 | 270 |
| **Épaisseur e des parois internes (µm)** | 310 | 310 | 310 | 310 | 310 |
| **Epaisseur Eₘᵢₙ des parois externes(µm)** | 544 | 660 | 660 | 660 | 660 |
| **Longueur élément (cm)** | 20,32 | 20,32 | 20,32 | 20,32 | 20,32 |
| **Volume externe de l'élément (cm³)** | 290, 3 | 290,3 | 290,3 | 290, | 290,3 |
| **Epaisseur E' maximale hors coin de la surépaisseur (µm)** | 767 | 847 | 838 | 660 | 847 |
| **Largeur d du renforcement(mm)** | 0 | 5,2 | 5,2 | 2,0 | 5,2 |
| **Largeur d' du renforcement hors coin (mm)** | 0 | 3,4 | 3,4 | 0 | 3, 6 |
| **R₂ (mm)** | 1,0 | 1,0 | 1,0 | 1,0 | 1,0 |
| **R₁ (mm)** | NA | 1,0 | 1,0 | 1,6 | 0,8 |
| **Angle α (degrés)** | 0 | 0 | 3 | 0 | 3 |
| **Epaisseur Ec de l'élément en coin (µm)** | 663 | 1198 | 1183 | 1182 | 1114 |
| **E_{c} / e** | 2, 14 | 3, 86 | 3,82 | 3, 81 | 3, 59 |
| **E_{c} / Eₘᵢₙ** | 1,22 | 1,82 | 1,79 | 1,79 | 1,69 |
| **E' / e** | 2,47 | 2,73 | 2,70 | 2,13 | 2,73 |
| **Masse (g)** | 189,1 | 191,6 | 190,8 | 190,1 | 190,7 |
| **Masse relative par rapport à l'exemple 1** | | +1% | +1% | +1% | +1% |

| | | | | | |
|---|---|---|---|---|---|
| (NA= non applicable) | | | | | |

Les échantillons des exemples précédents ont été évalués par les tests suivants :

### A- Mesure de la résistance thermomécanique :

Des filtres, assemblés à partir des éléments des exemples 1 à 5 selon le mode opératoire précédemment décrit, sont montés sur une ligne d'échappement d'un moteur 2.0 L diesel à injection directe mis en marche à pleine puissance (4000 tr/minutes) pendant 30 minutes puis démontés et pesés afin de déterminer leur masse initiale. Les filtres sont ensuite remontés sur banc moteur avec un régime à 3000 tr/min et un couple de 50 Nm pendant des durées différentes afin d'obtenir une charges en suies de 6 g/litre (en volume du filtre).

Les filtres ainsi chargés sont remontés sur la ligne pour subir une régénération sévère ainsi définie : après une stabilisation à un régime moteur de 1700 tours/minute pour un couple de 95 Nm pendant 2 minutes, une post-injection est réalisée avec 70° de phasage pour un débit de post injection de 18mm³/coup. Une fois la combustion des suies initiée, plus précisément lorsque la perte de charge diminue pendant au moins 4 secondes, le régime du moteur est abaissé à 1050 tours/minute pour un couple de 40 Nm pendant 5 minutes afin d'accélérer la combustion des suies. Le filtre est ensuite soumis à un régime moteur de 4000 tours/minute pendant 30 minutes afin d'éliminer les suies restantes.

Les filtres régénérés sont inspectés après découpe pour révéler la présence éventuelle de fissures visibles à l'oeil nu. La résistance thermomécanique du filtre est appréciée au vu du nombre de fissures, un nombre faible de fissures traduisant une résistance thermomécanique acceptable pour une utilisation comme filtre à particules.

### B- Mesure de la résistance mécanique

La force à la rupture est mesurée à température ambiante pour chaque exemple sur 30 éprouvettes correspondant à des éléments d'un même lot de fabrication de dimensions 20,32cm de longueur et 37,8 mm de largeur. Le montage en flexion 4 points est réalisé avec une distance de 180 mm entre les deux appuis inférieurs et une distance de 90mm entre les deux poinçons supérieurs typiquement selon la norme ASTM C1161-02.c. Des caoutchoucs sont placés sur les poinçons afin d'éviter une initiation de fissures par compression sur la face supérieure de l'éprouvette, ce qui pourrait perturber la qualité des mesures. La vitesse de descente du poinçon est constante de l'ordre de 10 mm/min. Une moyenne des 30 mesures est considérée comme représentative de la résistance mécanique pour chaque exemple.

Les principales données d'analyse et d'évaluation des filtres obtenus selon les exemples 1 à 5 sont reportées dans le tableau 2 ci-dessous.

**Tableau 2**

| | **Exemple 1** | **Exemple 2** | **Exemple 3** | **Exemple 4** | **Exemple 5** |
|---|---|---|---|---|---|
| **Porosité moyenne mesurée (%)** | 47,1 | 46,9 | 47,2 | 47,3 | 47,4 |
| **Force à la rupture mesurée (N)** | 3900 | 4150 | 4200 | 4450 | 4500 |
| **Force à la rupture/masse Ratio calculé (N/g)** | 20, 6 | 21, 7 | 22, 0 | 23, 4 | 23, 6 |
| **Nombre de fissures observées dans un filtre après une régénération à 6g/L** | 5 à 10 | 0 à 5 | 0 à 4 | 0 à 5 | 0 à 5 |

On voit dans le Tableau 2 que les éléments monolithiques des exemples 2 à 5 ont un rapport Force à la rupture sur Masse plus élevé et les filtres de ces exemples montrent un meilleur comportement thermomécanique que pour l'exemple 1.

## Revendications

1. Elément monolithique en nid d'abeille (1) comprenant un ensemble de conduits ou canaux adjacents (8,9) d'axes parallèles entre eux séparés par des parois poreuses (4), lesdits conduits étant obturés par des bouchons à l'une ou l'autre de leurs extrémités pour délimiter des conduits d'entrée (2) s'ouvrant suivant une face d'admission des gaz et des conduits de sortie (3) s'ouvrant suivant une face d'évacuation des gaz, de telle façon que le gaz traverse les parois poreuses(4), ledit élément (1) **se caractérisant en ce que** les canaux périphériques (8) formant partie de la paroi externe (7) dudit élément sont configurés pour concourir à la formation d'une paroi externe (7) dont la face interne (7') est sensiblement plane sur toute la longueur de l'élément (1) et **en ce que** ladite paroi plane présente en outre une surépaisseur (10,10') au niveau des coins (11), de telle sorte que, selon une coupe transversale, le rapport R de l'épaisseur E_{c} de la paroi, mesurée selon la bissectrice de l'angle au niveau d'un coin (11) de l'élément (1), sur l'épaisseur minimale Eₘᵢₙ de ladite paroi soit supérieur à 1,5.

2. Elément monolithique selon la revendication 1 présentant, en coupe transversale, une ondulation périodique des parois des canaux internes permettant d'accroître le volume global desdits canaux d'entrée (2) au dépend des canaux de sortie (3).

3. Elément monolithique selon la revendication 1 ou 2 dans lequel l'épaisseur Eₘᵢₙ de ladite paroi externe (4) est mesurée au milieu d'un coté de l'élément (1).

4. Elément monolithique selon l'une des revendications 1 à 3, dans lequel ladite surépaisseur (10) s'étend, à partir de chaque coin (11) de l'élément, sur une portion des parois externes et dans lequel ladite surépaisseur est continue et constante sur ladite portion.

5. Elément monolithique selon l'une des revendications 1 à 3, dans lequel ladite surépaisseur (10') s'étend, à partir de chaque coin (11) de l'élément, sur une portion des parois externes et dans lequel ladite surépaisseur est continue et décroissante sur ladite portion.

6. Elément monolithique selon l'une des revendications précédentes, dans lequel ladite surépaisseur (10,10') s'étend, à partir de chaque coin de l'élément sur une surface totale égale à au moins un huitième et de préférence égale à au moins un quart de la surface totale des faces internes des parois externes.

7. Elément monolithique selon l'une des revendications précédentes, dans lequel le rapport de R' de l'épaisseur de la paroi externe (7), mesurée selon la bissectrice de l'angle au niveau d'un coin (11) de l'élément, sur l'épaisseur moyenne e des parois internes (4) des canaux est supérieur à 2,7, de préférence supérieur à 3,5.

8. Elément monolithique selon l'une des revendications précédentes, dans lequel l'épaisseur E_{c} de la paroi, mesurée selon la bissectrice de l'angle au niveau d'un coin de l'élément est comprise entre 150 et 5000 microns, de préférence entre 700 et 2000 microns, de préférence encore entre 1000 et 1300 microns.

9. Elément monolithique selon l'une des revendications précédentes, dans lequel l'épaisseur Eₘᵢₙ de ladite paroi au centre d'un coté de l'élément est comprise entre 100 et 3500 microns, de préférence entre 450 et 1300 microns, de préférence encore entre 600 et 900 microns.

10. Elément monolithique selon l'une des revendications précédentes, dans lequel l'épaisseur moyenne e des parois internes des canaux est comprise entre 100 et 400 microns, de préférence entre 200 et 350 microns.

11. Filtre obtenu par l'assemblage d'une pluralité d'éléments monolithiques selon l'une des revendications précédentes lesdits éléments étant liés par un ciment de joint.

12. Filtre selon la revendication 11, dans lequel lesdits éléments et le ciment de joint sont à base d'un même matériau céramique, préférentiellement à base de carbure de silicium SiC.

13. Filière d'extrusion conformée de manière à former, par extrusion d'une matière céramique, un élément monolithique selon l'une des revendications 1 à 10.

## Claims

1. Monolithic honeycomb element (1) comprising a set of adjacent ducts or channels (8, 9) with axes parallel with one another separated by porous walls (4), said ducts being stopped by plugs at one or other of their ends to delimit inlet ducts (2) opening on a gas intake face and outlet ducts (3) opening on a gas discharge face, so that the gas passes through the porous walls (4), said element (1) being **characterized in that** the peripheral channels (8) forming part of the outer wall (7) of said element are configured to help in the formation of an outer wall (7) whose inner face (7') is substantially flat over the whole length of the element (1) and **in that** said flat wall also has an increased thickness (10, 10') at the corners (11), so that, on a cross section, the ratio R of the thickness E_{c} of the wall, measured along the bisecting line of the angle at a corner (11) of the element (1), over the minimal thickness Eₘᵢₙ of said wall is greater than 1.5.

2. Monolithic element according to Claim 1, having, in cross section, a periodic undulation of the walls of the inner channels making it possible to increase the overall volume of said inlet channels (2) at the expense of the outlet channels (3).

3. Monolithic element according to Claim 1 or 2, in which the thickness Eₘᵢₙ of said outer wall (4) is measured in the middle of a side of the element (1).

4. Monolithic element according to one of Claims 1 to 3, in which said increased thickness (10) extends, from each corner (11) of the element, over a portion of the outer walls and in which said increased thickness is continuous and constant over said portion.

5. Monolithic element according to one of Claims 1 to 3, in which said increased thickness (10') extends, from each corner (11) of the element, over a portion of the outer walls and in which said increased thickness is continuous and decreasing over said portion.

6. Monolithic element according to one of the preceding claims, in which said increased thickness (10, 10') extends, from each corner of the element, over a total surface area equal to at least one eighth and preferably equal to at least one quarter of the total surface area of the inner faces of the outer walls.

7. Monolithic element according to one of the preceding claims, in which the ratio of the thickness Ec of the outer wall (7), measured along the bisecting line of the angle at a corner (11) of the element, over the average thickness e of the inner walls (4) of the channels is greater than 2.7, preferably greater than 3.5.

8. Monolithic element according to one of the preceding claims, in which the thickness E_{c} of the wall, measured along the bisecting line of the angle at a corner of the element, lies between 150 and 5000 microns, preferably between 700 and 2000 microns, preferably still between 1000 and 1300 microns.

9. Monolithic element according to one of the preceding claims, in which the thickness Eₘᵢₙ of said wall at the center of a side of the element lies between 100 and 3500 microns, preferably between 450 and 1300 microns, preferably still between 600 and 900 microns.

10. Monolithic element according to one of the preceding claims, in which the average thickness e of the inner walls of the channels lies between 100 and 400 microns, preferably between 200 and 350 microns.

11. Filter obtained by the assembly of a plurality of monolithic elements according to one of the preceding claims, said elements being connected together by a joint cement.

12. Filter according to Claim 11, in which said elements and the joint cement are based on one and the same ceramic material, preferably based on silicon carbide SiC.

13. Extrusion die shaped so as to form, by extrusion of a ceramic material, a monolithic element according to one of Claims 1 to 10.

## Patentansprüche

1. Monolithisches Element (1), das wabenförmig ist und eine Gruppe von einander benachbarten Leitungen (8, 9) oder Kanälen mit zueinander parallelen Achsen, die durch poröse Wände (4) getrennt sind, umfasst, wobei diese Leitungen an einem ihrer Enden mit Verschlüssen verschlossen sind, um Eintrittsleitungen (2), die sich zu einer Einlassseite des Gases hin öffnen, und Austrittsleitungen (3), die sich zu einer Auslassseite des Gases hin öffnen, derart zu begrenzen, dass das Gas durch die porösen Wände (4) hindurchströmt, und das Element (1) **dadurch gekennzeichnet ist, dass** die außen befindlichen Kanäle (8), die einen Bestandteil der Außenwand (7) dieses Elements bilden, gestaltet sind, um sich an der Bildung einer Außenwand (7) zu beteiligen, deren Innenseite (7') über die gesamte Länge des Elements (1) im Wesentlichen eben ist, **und dass** diese ebene Wand außerdem eine Überdicke (10, 10') in den Ecken (11) derart aufweist, dass in einem Querschnitt das Verhältnis R von Dicke E_{c} der Wand, gemessen entlang der Winkelhalbierenden des Winkels einer Ecke (11) des Elements (1), zu Mindestdicke Eₘᵢₙ dieser Wand mehr als 1,5 beträgt.

2. Monolithisches Element nach Anspruch 1, das im Querschnitt eine periodische Welligkeit der Wände der Innenkanäle aufweist, die es erlaubt, das Gesamtvolumen der Eintrittskanäle (2) in Abhängigkeit von den Austrittskanälen (3) zu vergrößern.

3. Monolithisches Element nach Anspruch 1 oder 2, bei welchem die Dicke Eₘᵢₙ der Außenwand (4) in der Mitte einer Seite des Elements (1) gemessen wird.

4. Monolithisches Element nach einem der Ansprüche 1 bis 3, bei welchem sich die Überdicke (10) ab jeder Ecke (11) des Elements über einen Teil der Außenwände erstreckt und bei welchem diese Überdicke über diesen Teil kontinuierlich und konstant ist.

5. Monolithisches Element nach einem der Ansprüche 1 bis 3, bei welchem sich die Überdicke (10') ab jeder Ecke (11) des Elements über einen Teil der Außenwände erstreckt und bei welchem diese Überdicke über diesen Teil kontinuierlich und konstant ist.

6. Monolithisches Element nach einem der vorhergehenden Ansprüche, bei welchem sich die Überdicke (10, 10') ab jeder Ecke des Elements über eine Gesamtfläche erstreckt, die mindestens ein Achtel und vorzugsweise mindestens ein Viertel der Gesamtfläche der Innenseiten der Außenwände beträgt.

7. Monolithisches Element nach einem der vorhergehenden Ansprüche, bei welchem das Verhältnis R' von Dicke der Außenwand (7), gemessen entlang der Winkelhalbierenden des Winkels einer Ecke (11) des Elements, zu mittlerer Dicke e der Innenwände (4) der Kanäle mehr als 2,7 und vorzugsweise mehr als 3,5 beträgt.

8. Monolithisches Element nach einem der vorhergehenden Ansprüche, bei welchem die Dicke E_{c} der Wand, gemessen entlang der Winkelhalbierenden des Winkels einer Ecke des Elements, 150 bis 5000 Mikrometer, vorzugsweise zwischen 700 und 2000 Mikrometer, und besonders bevorzugt zwischen 1000 und 1300 Mikrometer beträgt.

9. Monolithisches Element nach einem der vorhergehenden Ansprüche, bei welchem die Dicke Eₘᵢₙ der Wand in der Mitte einer Seite des Elements 100 bis 3500 Mikrometer, vorzugsweise zwischen 450 und 1300 Mikrometer, und besonders bevorzugt zwischen 600 und 900 Mikrometer beträgt.

10. Monolithisches Element nach einem der vorhergehenden Ansprüche, bei welchem die mittlere Dicke e der Innenwände der Kanäle 100 bis 400 Mikrometer und vorzugsweise zwischen 200 und 350 Mikrometer beträgt.

11. Filter, der durch den Zusammenbau einer Vielzahl monolithischer Elemente nach einem der vorhergehenden Ansprüche hergestellt worden ist, wobei diese Elemente durch einen Verbindungszement verbunden wurden.

12. Filter nach Anspruch 11, bei welchem die Elemente und der Verbindungszement ein und dasselbe keramische Material und vorzugsweise Siliciumcarbid, SiC, zur Grundlage haben.

13. Extrusionsdüse, die derart konstruiert ist, dass sie durch Extrudieren ein keramisches Material zu einem monolithischen Element nach einem der Ansprüche 1 bis 10 formt.
